# EUROPEAN PATENT SPECIFICATION

(11) **EP 0 274 912 B1**
(45) Date of publication and mention of the grant of the patent: **24.02.1993**
(21) Application number: 87311534.9
(22) Date of filing: 31.12.1987
(51) Int. Cl.: C08F 8/00, C08F 216/04

(54) **Process for preparing polyalcohol copolymers**
Herstellungsverfahren von Polyalkoholcopolymeren
Procédé de préparation de copolymères de polyalcool

(30) Priority: 02.01.1987 US 51
(43) Date of publication of application: 20.07.1988
(73) Proprietor: EXXON RESEARCH AND ENGINEERING COMPANY, Florham Park, New Jersey 07932-0390 (US)
(72) Inventor: Chung, Tze-Chiang, Bridgewater New Jersey 08807 (US); Berluche, Enock, Phillipsburg New Jersey 08865 (US); Schulz, Donald Norman, Annandale New Jersey 08801 (US); Wagensommer, Joseph, Westfield New Jersey 07090 (US)
(74) Representative: Fletcher Watts, Susan J.

(56) References cited:
- DE-A- 1 815 328
- US-A- 3 492 277
- POLYMER JORNAL, vol. 6, no. 5, 1974, pages 403-411, Tokyo, JP; S.-I. NOZAKURA et al.: "The synthesis and polymerization of phenylvinyloxyboranes"
- CHEMICAL ABSTRACTS, vol. 70, no. 10, 10th March 1969, page 26, abstract no. 38385n, Columbus, Ohio, US; T. KIMURA et al.: "Copolymerization of crotyl alcohol with vinyl monomers"

## Description

The present invention relates to a process for preparing polyalcohol copolymers. The polyalcohol copolymers are useful in thin film applications for the packing industry. The invention also relates to intermediate compounds used in the process of preparing the polyalcohol copolymers.

Thin film composites of polyethylene, a copolymer of ethylene propylene and polyvinyl alcohol have found extensive use in the food packaging industry for meats, vegetables and fruits. The polyvinyl alcohol of these composite films imparts the necessary barrier properties to the composite. The polyethylene imparts the necessary physical properties to the film composite to enable one to have an integral film system. The ethylene/propylene copolymer acts as a binding agent between the ethylene and the polyvinyl alcohol.

The present invention teaches the use of a thin film of a polyalcohol copolymer for use in the food packaging industry. The use of polyalcohol copolymer eliminates the need for the use of film composites because the polyalcohol copolymer, besides exhibiting excellent thermal stability and barrier properties, also possesses physical properties which permit the formation of polymeric thin film having sufficient physical integrity.

Polyalcohols like polyvinyl alcohol 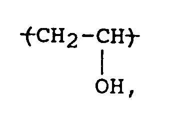
are well known useful materials prepared via free radical polymerization of vinyl acetate, followed by hydrolysis to polyvinyl alcohol. Such polyalcohols always contain unreacted acetate residues. Also, since the alcohol group is attached directly to the backbone, such polymers do not particularly have high thermal stability, decomposition occurs at about 17°C.

Direct polymerization of alcohol containing monomers, although desirable, is synthetically difficult to achieve. One reason for this situation is that alcoholic functionalities poison organometallic catalysts, like Ziegler-Natta (Al, Ti) catalysts.

Copolymers of alpha olefins (e.g., ethylene and propylene) with special alcohol monomers, e.g., undecylenyl alcohol, have been reported by Clark, U.S. Patent No. 3,492,277, by pretreating the alcohol with organoaluminum compounds.

Borane compounds are valuable intermediates in organic synthesis (H. C. Brown, Organic Synthesis via Boranes, Wiley-Interscience, 1975). Yet, reports of borane functional polymers are few. Exceptions are reports of borane adducts of polydienes, e.g., polybutadiene or polyisoprene. [C. Pinazzi, J. C. Brosse, A. Pleurdean and D. Reyx, Applied Polymer Symposium 26 73 (1975.] However, these materials are products of a post-polymerization process. Generally, post-polymerization processes are more costly than direct polymerization techniques. Also, post-polymerization reaction can never achieve complete conversion of the functional groups. Thus, highly functional polymers are excluded from such preparative methods.

Direct polymerization of functional alpha olefins by Ziegler-Natta polymerization is difficult to achieve because most functional groups deactivate the active polymerization sites or poison Ziegler-Natta polymers. Yet, functional Ziegler-Natta polymers (e.g., -OH, -COOH, COOH) are highly useful as dyeable plastics or solution modifiers (e.g., drag reducing agents), U.S. Patent No. 3,492,277, Japanese Applications 57-152767, 57-188976, 57-188997, U.S. Patent No. 4,518,757, M. D. Purgett, Ph.D. Thesis, University of Massachusetts, 1984.

The present invention provides a process for synthesizing the polyalcohol copolymers comprising dissolving a polyborane copolymer in a cosolvent such as tetrahydrofuran to form a polymeric solution; injecting a sodium hydroxide solution into the polymeric solution at 20°C to 30°C, preferably 25°C; injecting a hydrogen peroxide solution into the polymeric solution at -1°C to 5°C, preferably 0°C; heating the polymeric solution to a temperature of 45°C to 50°C, preferably at least 50°C; and maintaining the polymeric solution at 45°C to 50°C, preferably at least 50°C, for at least 1 hour to convert the polyborane copolymer to the polyalcohol copolymer; cooling the polymeric solution from 20°C to 30°C, preferably room temperature, and adding an aliphatic hydrocarbon, such as hexane, to the polymeric solution to precipitate the polyalcohol copolymer from the polymeric solution.

The polyalcohol copolymers prepared by the process of the instant invention have the formula: 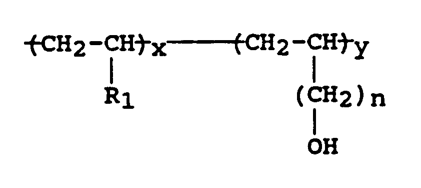
wherein n is 2 to 10, more preferably 3 to 9, and most preferably 3 to 18; R₁ is hydrogen or an alkyl group having 1 to 20 carbon atoms; x is 1 to 99 mole percent, more preferably 20 to 60; and y is 1 to 99 mole percent, preferably 40 to 80, and most preferably 40 to 60. The number average molecular weight of the polyalcohol copolymer as measured by GPC is 10,000 to 5,000,000, more preferably 50,000 to 3,000,000, and most preferably 50,000 to 2,000,000.

Polyborane copolymers useful in the synthesis of the polyalcohol copolymers have the formula: 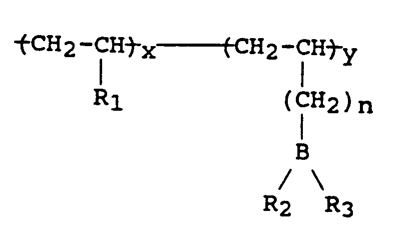
where n is 2 to 10, more preferably 3 to 9 and most preferably 3 to 8; and R₂ and R₃ are the same or different alkyl or cycloalkyl groups having 1 to 10 carbon atoms, such as 9-borabicyclo (3,3,1) nonane, and R₁ is hydrogen or an alkyl group having 1 to 20 carbon atoms; x is 1 to 99 mole percent, more preferably 20 to 60; and y is 1 to 99 mole percent, preferably 40 to 80, and most preferably 40 to 60.

The polyborane copolymers may be formed by a Ziegler-Natta polymerization of a borane monomer, such as B-7-octenyl-9-BBN, B-5-hexenyl-9-BBN or B-4-pentenyl-9-BBN (where B represents boron, and BBN represents borabicyclo (3,3,1) nonane) with an alpha-olefin having 2 to 20 carbon atoms, more preferably 4 to 16 carbon atoms and most preferably 5 to 12 carbon atoms. Typical alpha-olefins as envisioned are 1-pentene and 1-hexene and 1-octene. The Ziegler-Natta catalyst of TiCl₃.AA (where AA represents Alumina Activated), Al(Et)₂Cl and toluene under an inert atmosphere, such as argon or nitrogen, at room temperature is added to a mixture of a Ziegler-Natta alpha-olefin and borane monomer. The mixture of Ziegler-Natta catalyst and borane monomer is stirred at room temperature for at least 20 minutes until the mixture becomes viscous. The polymerization reaction is terminated by the addition of an aliphatic alcohol. The precipitate of the polyborane copolymer is washed with additional aliphatic alcohol and subsequently vacuum dried. The polyborane copolymer has a molecular weight as measured by GPC of 10,000 to 5,000,000, more preferably 50,000 to 3,000,000, and most preferably 50,000 to 2,000,000.

The borane monomers may be prepared by reacting under an inert atmosphere at room temperature 1,5 hexadiene, 1,4 pentadiene or 1,7 octadiene with a solution of 9-BBN-THF (9-borabicyclo (3,3,1) nonane-tetrahydrofuran) for at least about 1 hour. The unreacted diene and solvent are recovered from the reaction solution by reducing the pressure. The formed borane monomer is recovered by distilling at elevated temperature and reduced pressure.

The thin polymeric films of the polyalcohol copolymer are at least 1.27 x 10⁻⁴ µm (5 µ mils) thick. These polymeric films are casted from n-propanol or THF solutions which contain about 5% of polyalcohol copolymers. The polymer films exhibit high thermal stability with a major decomposition temperature above 450°C.

The polyalcohol copolymers prepared by the process of the instant invention are useful as thin films for the packaging industries, for example, food packaging. Additionally, the copolymers can be formed, for example, by an extrusion process, into a flexible bottle for use in packaging liquid materials.

The following Examples 4 to 10 illustrate the present invention.

### Example 1

### Preparation of Monomer, B-7-Octenyl-9-BBN

A dry 500 ml flask was equipped with a magnetic stirring bar and a connecting tube leading to a nitrogen source. The flask was thoroughly flushed with nitrogen before the injection inlet was capped with a rubber serum stopple. A slight positive pressure of nitrogen was maintained thereafter. The flask was charged via syringe with 60 ml 1,7-octadiene. To the stirred diene solution was then added (via syringe) 200 ml of the 0.5 M 9-BBN-THF solution. Sufficient time was allowed to ensure complete reaction then the solvent and unreacted diene were recovered by reducing pressure. B-octenyl-9-BBN monomer (19.4 g, 84%) was distilled at 140°C under 10 µm pressure. Spectroscopic evidenced by IR and 'HNMR spectra confirmed the expected molecule structure of monomer. IR: 3,070 cm⁻¹ (C-CH₂ stretching), 2,850-2,925 cm⁻¹ (C-H stretching), 1,807 cm⁻¹ (overtone), 1,640 cm⁻¹ (C=C stretching), 1,440 cm⁻¹ (CH₂ bending), 1,370 cm⁻¹ (CH₂ wagging), 905 cm⁻¹ (CH₂=CH bending, 720 cm⁻¹ (CH₂ rocking). ʹH NMR: δ₁ = 4.9-5.2 ppm (CH₂=C terminal), δ₂ = 5.6-6.2 ppm (-CH=C), δ₃ = 1.5-1.9 ppm (CH2), intensity ratio. δ₁:δ₂:δ₃ = 2:1:26.

### Example 2

### Preparation of Monomer, B-5-Hexenyl-9-BBN

Following the procedure of Example 1, 190 ml (1.6 mole) of 1.5 hexadiene was reacted with 800 ml (0.5 M) of 9-BBN/THF solution. The reaction was affected with constant stirring at room temperature. After a period of 3 hours excess 1.5-hexadiene and THF solvent were stripped by vacuum pumping at room temperature. Pure B-hexenyl-9-BBN (54 g) was obtained by distillation at 130°C with low pressure, 10 µm. The monomer was characterized by IR spectrum.

### Example 3

### Stability of Boranes in TiCl₃AA-Al(Et)₂Cl Catalysts

A dry flask, equipped with a septum inlet and magnetic stirrer, was charged with 2.43 g, 12 mmole of TiCl₂·AA and 2.91 g, 24 mmole of Al(Et)₂Cl in dry box. After the system was flushed with nitrogen and maintained under a pressure of the gas, 5 g, 24 mmole of B-hexyl-9-BBN was added into the catalyst solution with the aid of a syringe. The mixture was well stirred at room temperature for overnight without any visible reaction. The heterogeneous catalyst complex was then removed from the mixture by filtration under argon atmosphere and the unreacted (>4 g) B-hexyl-90-BBN was recovered by distillation from the filtrate in reduced pressure (20 µm) at 130°C.

### Example 4

### Preparation of Borane (7-Octenyl-9-BBN) Copolymer with 1-Octene (50%)

A half-liter flask was charged with Ziegler-Natta catalyst, TiCl₃·AA (0.4 mmole, 0.08 g), Al(Et)₂Cl (2.5 mmole, 0.3 g) and toluene (50 ml). After stirring the monomer mixture of 7-octenyl-9-BBN (22 mmole, 5.2 g) and 1-octene (22 mmole, 3.5 ml) was added with 50 ml of toluene. The polymerization was observed within five minutes with visible increase in viscosity. The solution was stirred at room temperature for two hours before the reaction was terminated with isopropanol (250 ml). The precipitate was collected by filtration, washed with isopropanol for three times and vacuum dried overnight to yield 6.2 g of copolymer. Trialkylborane in copolymers was characterized by "B NMR with chemical shift δ = 86.5 ppm from BF·Et₂. The IR spectrum, 2,940-2,840 cm⁻¹ (C-H stretching), 1,460 cm⁻¹ (CH₂ bending), 1,380 cm⁻¹ (CH₃ bending), 720 cm₋₁ (CH₂ rocking) was in good agreement with the molecule structure of copolymer. Borane copolymer was further converted to polymers with other functionalities (e.g., -NH₂, -OH, -CHO) under mild conditions. As will be shown in Example 8 this copolymer was oxidized to octenol-octene-copolymer with 1:1 mole ratio between octenol and octene.

### Example 5

### Preparation of Borane (7-Octenyl-9-BBN) Copolymer with 1-Octene (90%)

Following the procedure of Example 4, the monomer mixture of n-octenyl-9-BBN (9.35 g, 40 mmole) and 1-octene (40.65 g, 363 mmole) was added into a liter flask which was charged with Ziegler-Natta catalyst, 0.5 g of TiCl₃·AA, 2 g of Al(Et)₂Cl and 320 ml of toluene. After stirring at room temperature for three hours isopropanol (200 ml) was added and the resulting precipitate was collected by filtration and washed with isopropanol. The copolymer was then dried in vacuum line for overnight, resulting in 47 g of white elastomer. The IR spectrum was quite similar to that of borane copolymer with 1-octene (50%) shown in Example 4. However, this typical sample was further oxidized to alcohol copolymer with 1-octene which was estimated about 10 percent of octenol from IR ν_{O-H} and ν_{C-O}).

### Example 6

### Preparation of Borane (7-Octenyl-9-BBN) Copolymer with 1-Pentene (50%)

Following the procedure of Example 4, the experiment was repeated but 1-pentene (22 mmole) was used instead of 1-octene. The polymerization was carried out at room temperature for three hours to give 4.8 g of polymer. "B NMR spectrum showed a chemical shift δ = 88.5 ppm, relative to BF₃·OEt₂, which indicated the content of trialkylborane. The polymer was further oxidized to octene-8-ol copolymer with 1-pentene.

### Example 7

### Preparation of Borane (5-Hexenyl-9-BBN) Copolymer with 1-Pentene (50%)

Following the procedure of Example 4, 24 mmole, 5 g of 5-hexenyl-9-BBN and 24 mole, 1.69 g of 1-pentene were polymerized by Ziegler-Natta catalyst, TiCl₃·AA (0.3 mmole, 0.067 g), Al(Et)₂Cl (2.3 mmole, 0.28 g) and toluene (43 ml). After about three hours of continuous stirring of the reactants, 40 ml of isopropanol was used to terminate the reaction. The precipitate formed, which was collected by filtration, was washed with isopropanol twice before being dried in vacuum line for overnight. The overall yield was more than 80%. "B NMR spectrum showed a chemical shift δ = 88.5 ppm, relative to BF₃·OEt₂, which indicated the trialkylborane. The polymer was further oxidized to hexene-6-ol copolymer with 1-pentene.

### Example 8

### Preparation of Alcohol Copolymer with 1-Octene

Borane copolymer from Example 4 was converted to polyalcohol having alkylene alcohol side chains as described below:
A solution of copolymer (5.5 g) in THF (350 ml) was placed in a one liter flask before adding 4.8 ml, 6N of sodium hydroxide. Hydrogen peroxide (30%, 9.8 ml) dropwise over a period of 15 minutes. After stirring the mixture at 50°C for 3 hours the water (300 ml) was added and the precipitate was collected by filtration and washed with water. Further purification was carried out by redissolving the copolymer in n-propanol, reprecipitating with acetone and drying in vacuum for overnight to obtain the desired product (3.7 g). IR spectrum strong ν_{O-H} = 3,300 cm⁻¹ and ν_{C-O} = 1,050 cm⁻¹ indicated that borane group was converted to corresponding alcohol group. Elemental analysis results in Table I show quantitative conversion. Furthermore, the composition in copolymer, octene/octenol = 1, was the same as that of monomer feed shown in Example 4.

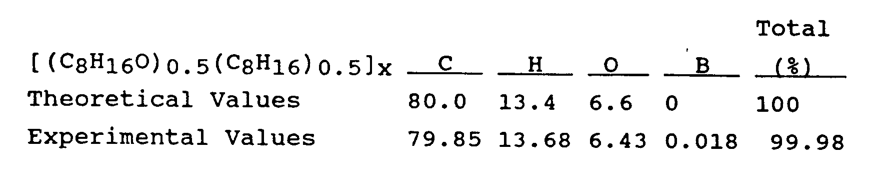

### Example 9

### Preparation of Alcohol Copolymer With 1-Octene (90%)

Borane 7-octenyl-9-BBN copolymer with 1-octene, from Example 4, was converted to alcohol-octene-copolymer by following the procedure of Example 8. Copolymer (27.5 g) was oxidized by 6N, 4.8 ml of NaOH and 30% 9.87 ml of H₂O₂ at 55°C. After about 3 hours of continuous stirring of the reactants 500 ml of water was added to the reaction mixture. A precipitate formed, which was collected by filtration, washed with water and isopropanol, then dried in vacuum oven for 24 hours, resulting in 23 g of white elastomer. Alcohols content was estimated from IR (ν_{O-H} and ν_{C-O}) to be about 10%.

A solution of copolymer was prepared in toluene at a concentration of 0.5 weight percent. The viscosity of this 0.5 weight percent solution was 3.7 x 10⁻³ Pa.s (3.7 cP) at 1.3 sec⁻¹ and at 25°C. After concentrating the solution by blowing nitrogen through the solution the vicosity of resulting 2 weight percent polymer solution was about 31.7 x 10⁻³ Pa.s (31.7 cP) at 1.3 sec⁻¹ and at 25°C.

### Example 10

### Preparation of Alcohol Copolymer With 1-Pentene (50%)

Following the procedure of Example 8, 5 g of 5-hexenyl-9-BBN copolymer with 1-pentene (200 ml)/THF was oxidized in the presence of 6N, 3 ml of NaOH and 30% 6.2 ml H₂O₂. The reaction was carried out at 55°C for 3 hours with constant stirring. Water (200 ml) was added to the reaction mixture, resulting in a precipitate which was collected by filtration and washed with water and isopropanol, then dried in vacuum oven for 24 hours, resulting in 2.7 g of polymer. The alcohol content was characterized by IR intense modes ν_{O-H} = 3,300 cm⁻¹ and ν_{C-O} = 1,050 cm⁻¹.

## Claims

1. A process for the synthesis of a polyalcohol copolymer which comprises the steps of:
(a) dissolving a polyborane copolymer in a solvent to form a polymeric solution;
(b) introducing an NaOH solution into said polymeric solution at 20 to 30°C;
(c) introducing a hydrogen peroxide solution into said polymeric solution at -1 to 5°C;
(d) heating said polymeric solution to at least 45 to 50°C;
(e) maintaining said polymeric solution at at least 45 to 50°C for at least about 1 hour to form said polyalcohol copolymer;
(f) cooling said polymeric solution to 20 to 30°C; and
(g) precipitating said polyalcohol copolymer from said polymeric solution by the addition of an aliphatic hydrocarbon to said polymeric solution.

2. A process according to claim 1 wherein the polyborane copolymer of step (a) is of the formula: 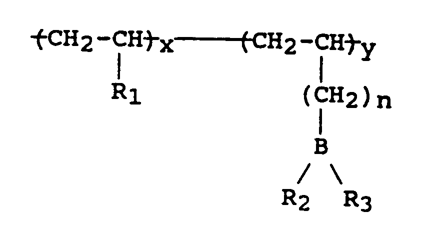 wherein R₁ is hydrogen or an alkyl group having 1 to 20 carbon atoms; R₂ and R₃ are the same or different alkyl or cycloalkyl groups having 1 to 10 carbon atoms; n is 2 to 10; x is 1 to 99 mole percent; and y is 99 to 1 mole percent.

3. A polyborane copolymer having the formula: 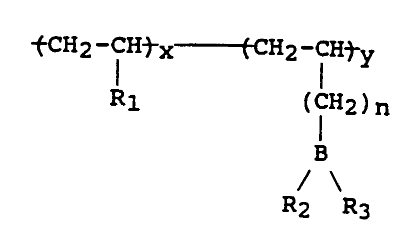 wherein R₁ is hydrogen or an alkyl group having 1 to 20 carbon atoms; R₂ and R₃ are the same or different alkyl or cycloalkyl groups having 1 to 10 carbon atoms; n is 2 to 10; x is 1 to 99 mole percent; and y is 99 to 1 mole percent.

## Patentansprüche

1. Verfahren zur Synthese eines Polyalkoholcopolymers, bei dem
(a) ein Polyborancopolymer in einem Lösungsmittel gelöst wird, um eine polymere Lösung zu bilden,
(b) in die polymere Lösung bei 20 bis 30°C eine NaOH-Lösung eingeführt wird,
(c) in die polymere Lösung bei -1 bis 5°C eine Wasserstoffperoxidlösung eingeführt wird,
(d) die polymere Lösung auf mindestens 45 bis 50°C erhitzt wird,
(e) die polymere Lösung mindestens etwa 1 Stunde lang bei etwa 45 bis 50°C gehalten wird, um das Polyalkoholcopolymer zu bilden,
(f) die polymere Lösung auf 20 bis 30°C abgekühlt wird und
(g) das Polyalkoholcopolymer durch Zugabe von aliphatischem Kohlenwasserstoff zu der polymeren Lösung aus der polymeren Lösung ausgefällt wird.

2. Verfahren nach Anspruch 1, bei dem das Polyborancopolymer aus (a) die Formel: 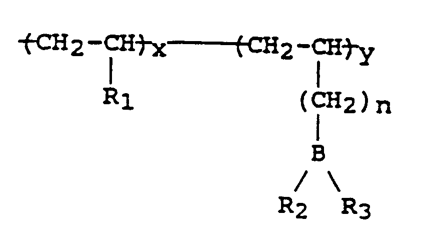 hat, in der R₁ Wasserstoff oder eine Alkylgruppe mit 1 bis 20 Kohlenstoffatomen ist, R₂ und R₃ die gleichen oder verschiedene Alkyl- oder Cycloalkylgruppen mit 1 bis 10 Kohlenstoffatomen sind, n 2 bis 10 ist, x 1 bis 99 Mol.-% ist und y 99 bis 1 Mol.-% ist.

3. Polyborancopolymer der Formel: 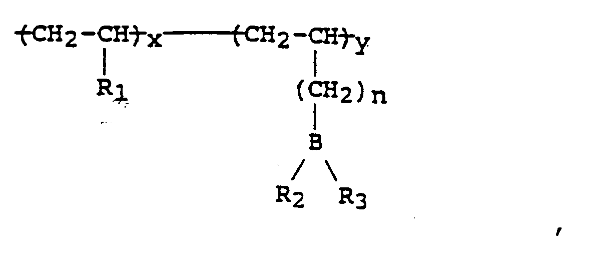 in der R₁ Wasserstoff oder eine Alkylgruppe mit 1 bis 20 Kohlenstoffatomen ist, R₂ und R₃ die gleichen oder verschiedene Alkyl- oder Cycloalkylgruppen mit 1 bis 10 Kohlenstoffatomen sind, n 2 bis 10 ist, x 1 bis 99 Mol.-% ist und y 99 bis 1 Mol.-% ist.

## Revendications

1. Procédé pour la synthèse d'un copolymère polyalcool, comprenant les étapes suivantes:
(a) dissolution d'un copolymère polyborane dans un solvant, pour l'obtention d'une solution de polymère;
(b) introduction d'une solution de NaOH dans ladite solution de polymère, à 20-30°C;
(c) introduction d'une solution de peroxyde d'hydrogène dans ladite solution de polymère, à une température de -1 à 5°C;
(d) chauffage de ladite solution de polymère a au moins 45 à 50°C;
(e) maintien de ladite solution de polymère à au moins 45 à 50°C pendant au moins 1 heure, pour la formation dudit copolymère polyalcool;
(f) refroidissement de ladite solution de polymère jusqu'à 20 à 30°C; et
(g) séparation dudit copolymère polyalcool d'avec ladite solution de polymère par précipitation par l'addition d'un hydrocarbure aliphatique à ladite solution de polymère.

2. Procédé selon la revendication 1, dans lequel le copolymère polyborane de l'étape (a) est de formule: 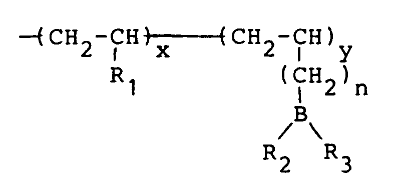 dans laquelle R₁ est un atome d'hydrogène ou un groupe alkyle ayant de 1 à 20 atomes de carbone; R₂ et R₃ sont des groupes alkyle ou cycloalkyle identiques ou différents ayant de 1 à 10 atomes de carbone; n va de 2 à 10; x va de 1 à 99 % en moles; et y va de 99 à 1 % en moles.

3. Copolymère polyborane de formule: 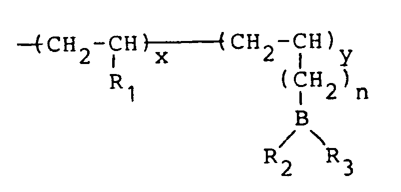 dans laquelle R₁ est un atome d'hydrogène ou un groupe alkyle ayant de 1 à 20 atomes de carbone; R₂ et R₃ sont des groupes alkyle ou cycloalkyle identiques ou différents ayant de 1 à 10 atomes de carbone; n va de 2 à 10; x va de 1 à 99 % en moles; et y va de 99 à 1 % en moles.
